**Europäisches Patentamt**

**European Patent Office**

**Office européen des brevets**

(19)

(11) Veröffentlichungsnummer : **0 198 436 B1**

# (12) EUROPÄISCHE PATENTSCHRIFT

(45) Veröffentlichungstag der Patentschrift :
**06.02.91 Patentblatt 91/06**

(51) Int. Cl.$^5$ : **C01G 49/00,** C01G 49/06, G11B 5/706

(21) Anmeldenummer : **86104972.4**

(22) Anmeldetag : **11.04.86**

(54) **Verfahren zur Herstellung isotroper magnetischer, kobalthaltiger Eisenoxide aus Eisen(III)-Salzen.**

(30) Priorität : **18.04.85 DE 3514008**

(43) Veröffentlichungstag der Anmeldung :
**22.10.86 Patentblatt 86/43**

(45) Bekanntmachung des Hinweises auf die
Patenterteilung :
**06.02.91 Patentblatt 91/06**

(84) Benannte Vertragsstaaten :
**DE FR GB NL**

(56) Entgegenhaltungen :
**EP-A- 0 040 722**
**DE-A- 2 710 776**
**DE-A- 3 146 982**

(73) Patentinhaber : **BASF Aktiengesellschaft**
**Carl-Bosch-Strasse 38**
**D-6700 Ludwigshafen (DE)**

(72) Erfinder : **Arndt, Volker, Dr.**
**Koenigsberger Strasse 1**
**D-6712 Bobenheim-Roxheim (DE)**
Erfinder : **Meyer, Bernd, Dr.**
**Weschnitzaeckerstrasse 8**
**D-6942 Moerlenbach (DE)**
Erfinder : **Steck, Werner, Dr.**
**Auerstrasse 4**
**D-6700 Ludwigshafen (DE)**
Erfinder : **Jakusch, Helmut, Dr.**
**Lorscher Ring 6 c**
**D-6710 Frankenthal (DE)**

EP 0 198 436 B1

## Beschreibung

Die Erfindung betrifft ein Verfahren zur Herstellung isotroper magnetischer, kobalthaltiger Eisenoxide auf der Basis des $\gamma$-Eisen(III)oxids mit einem Gehalt an Co(II)-Ionen von 1 bis 7 Gew.% und einem Längen-zu-Dicken-Verhältnis von 1,2 bis 3,5 aus Eisen(III)-Salzen.

Die Entwicklung der magnetischen Aufzeichnungsträger ist seit geraumer Zeit, insbesondere durch die Anforderungen bei der Daten- und Videosignalspeicherung, auf Aufzeichnungen in hoher Dichte gerichtet. Für diesen Zweck werden Aufzeichnungsmaterialien mit äußerst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundenen Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich, doch sind dieser Maßnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelements als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Problemen der Herstellung solcher homogener Metallschichten vor allem mechanische Probleme bei deren Benutzung auf.

Im Hinblick auf die aufgezeigten Schwierigkeiten und im Bestreben dennoch magnetische Aufzeichnungssysteme, welche eine hohe Aufzeichnungsdichte bei hohen Ausgangspegeln aufweisen, bereitzustellen, wurde auch bereits vorgeschlagen, eine zum Aufzeichnungsträger senkrechte magnetische Aufzeichnung vorzunehmen. Hierzu müßten die Aufzeichnungsträger Schichten aufweisen, die zumindest in dem Schichtbereich, welcher dem Magnetkopf am nächsten liegt, eine senkrechte Magnetisierung ermöglichen (US-PS 3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, untersucht. Jedoch konnten weder die Herstellung noch die erzielbaren Eigenschaften bisher befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurzer Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kobaltdotierten kubischen Eisenoxide aufgebaut sind. Die Herstellung solcher isometrischer als auch stark anisometrischer magnetischer Eisenoxide ist bekannt. Des gleichen ist die Herstellung anisometrischer Eisenoxide mit volumenhomogener Kobaltdotierung bekannt (DE-PS 1 226 997, DE-AS 22 21 218, DE-OS 29 03 593). Die Verfahren zur Herstellung hierfür geeigneter Eisenoxide gehen alle von Eisen(II)-Salzen aus. Ein Verfahren, das von Eisen(III)-Salzen ausgeht, wird in DE-OS 31 46 982 beschrieben. Es werden jedoch langnadelige Produkte mit einer Kobaltferrithülle und kobaltfreiem $\gamma$-Fe$_2$O$_3$-Kern erhalten, die sowohl von der Geometrie her als auch von den magnetischen Eigenschaften, da sie bekanntermaßen einen uniaxialen Charakter besitzen, ungeeignet sind.

Aufgabe der Erfindung war es daher, ein Verfahren zur Herstellung von isotropen magnetischen Eisenoxiden bereitzustellen, das unter Verwendung von in großen Mengen zur Verfügung stehenden Eisen(III)-Salzen ein hochwertiges magnetisches Material liefert, das sich durch isotrope Magnetisierung, durch eine für Aufzeichnungsträger geeignete hohe Koerzitivfeldstärke sowie durch vorteilhafte geometrische Abmessungen, welche zu einem Kompromiß zwischen Kristall- und Formanisotropie-Anteil führen, auszeichnet.

Es wurde nun gefunden, daß sich die gestellte Aufgabe durch ein Verfahren zur Herstellung isotropischer magnetischer kobalthaltiger Eisenoxide auf der Basis des $\gamma$-Eisen(III)oxids mit einem Gehalt an Kobalt(II)-Ionen von 1 bis 7 Gew.%, bezogen auf das Eisenoxid und einem Längen-zu-Dicken-Verhältnis von 1,2 bis 3,5 aus Eisen(III)-Verbindungen lösen läßt, wenn zur Herstellung dieses Materials durch Umsetzen von Eisen(III)-Hydroxid in Gegenwart von Kobalt(II)-Ionen in alkalischer, wäßriger Phase in Gegenwart von einem oder mehreren Wachstumsregulierungsmitteln, die aus der Gruppe der mit Eisen(III)-Ionen Chelat-Komplexe bildenden Verbindungen gewählt werden, bei erhöhter Temperatur ein kobalthaltiges $\alpha$-Fe$_2$O$_3$

2

hergestellt wird, das nach dem Abfiltrieren, Waschen und Trocknen durch Erhitzen in einer reduzierenden Atmosphäre zu kobalthaltigem Magnetit reduziert und anschließend in sauerstoffhaltiger Atmosphäre zu kobalthaltigem magnetischem Eisenoxid oxidiert wird.

Nach dem bekannten Verfahren (DE-OS 31 46 982) zur Herstellung von nadelförmigem epitaxial kobaltbeschichtetem $\gamma$-Eisen(III)oxid aus Eisen(III)hydroxid wird eine alkalische Suspension von Eisen(III)hydroxid bei einer Temperatur von 100 bis 250°C in Gegenwart eines Wachstumsregulierungsmittel, das mit Eisen(III)-Ionen Komplexe bilden kann, sowie von $\alpha$-Eisen(III)oxid-kristallkeimen erhitzt. Das nach Waschen, Filtrieren und Trocknen erhaltene nadelförmige $\alpha$-Eisen(III)oxid wird durch Reduktion zu Magnetit und anschließende Oxidation in $\gamma$-Eisen(III)oxid umgewandelt und anschließend durch Auffällen von Kobalt(II)hydroxid und Eisen(II)hydroxid in alkalischer Suspension modifiziert.

Gemäß der Erfindung wird dieses Verfahren bei gleichzeitiger Anwesenheit von Kobalt(II)-Ionen und unter Abwesenheit von $\alpha$-Fe$_2$O$_3$-Keimen durchgeführt. Dabei wird die Menge an Kobalt(II)-Ionen so gewählt, daß im Endprodukt 1 bis 7 Gew.% Kobalt vorhanden sind. Überraschenderweise zeigte sich, daß die Anwesenheit der Kobalt(II)-Ionen während der Synthese einen sehr starken, vorteilhaften Einfluß auf die Geometrie des erhaltenen Produktes ausübt. Es werden die erwünschten, schwach elongierten Teilchen erhalten. Bei der Durchführung des Verfahrens hat es sich als zweckmäßig erwiesen, die Reaktionstemperatur, die zwischen 70 und 250°C und vorzugsweise zwischen 90 und 200°C beträgt, langsam auf den Endwert zu steigern. So kann das normalerweise zu erwartende Ausfallen von Kobaltferrit mit kubischem Kristallgitter - und damit mit ungeeigneter Geometrie - unterdrückt werden. Die Anwesenheit von $\alpha$-Fe$_2$O$_3$-Keimen zur Kristallisationssteuerung muß bei diesem Verfahren unterbleiben, da sie die notwendige gleichmäßige Verteilung des Kobalts über das Volumen des Endprodukts verhindert. Die übrigen Synthesebedingungen werden in bekannter Weise eingestellt, d.h. die Synthese erfolgt in alkalischer Suspension bei einem pH von 9 bis 13 in Gegenwart einer wirksamen Menge eines oder mehrerer Wachstumsregulierungsmittel, die aus der Gruppe der mit Eisen(III)-Ionen Chelatkomplexe bildenden Verbindungen gewählt werden. Als besonders vorteilhaft haben sich ein pH-Wert von 11 bis 12 und eine Zugbe von $10^{-3}$ bis $10^{-2}$ Mol/l $\alpha$-Hydroxycarbonsäuren erwiesen.

Die Zugabe der Kobalt(II)-Ionen kann sowohl vor der Fällung des Eisen(III)hydroxids als auch nach der Fällung vor der Synthese erfolgen. Im ersten Fall erhält man eine Eisen(III)hydroxid-Fällung, in der das Kobalt als Co(OH)$_2$ mitgefällt und homogen verteilt ist. Im zweiten Fall wird eine lösliche Kobalt(II)-Verbindung der Reaktionsmischung zugeführt und durch Rühren homogen verteilt.

Nach beendeter Synthese wird das kobalthaltige $\alpha$-Eisen(III)oxid filtriert, gewaschen und getrocknet. Anschließend wird das kobalthaltige $\alpha$-Fe$_2$O$_3$ in an sich bekannter Weise in einer reduzierenden Atmosphäre, z.B. mit Wasserstoff und/oder mittels organischer Substanzen, die sich in Gegenwart von Eisenoxiden zersetzen, zu kobalthaltigem Magnetit reduziert, wobei in allen Fällen die gleichzeitige Anwesenheit von Wasserdampf zur Vermeidung einer Reduktion zu metallischen Phasen zweckmäßig ist. Je nach Reduktionsmittel und Dauer, die zwischen 20 Minuten und 3 Stunden liegen kann, erwiesen sich Reduktionstemperaturen zwischen 300 und 450°C als geeignet.

Der als Zwischenstufe erhaltene kobalthaltige Magnetit läßt sich in an sich bekannter Weise mit oxidierenden Gasen, wie z.B. Sauerstoff oder Luft, bei Temperaturen zwischen 250 und 350°C oxidieren. Abhängig von der jeweiligen Oxidationstemperatur haben sich Zeiten von 10 Minuten bis 1 Stunde als zweckmäßig erwiesen. Dabei sind die Oxidationsbedingungen so zu wählen, daß die bekannte irreversible Umwandlung von $\gamma$-Fe$_2$O$_3$ zu $\alpha$-Fe$_2$O$_3$ vermieden wird.

Die erfindungsgemäß hergestellten kobalthaltigen Eisenoxide auf der Basis des $\gamma$-Eisen(III)oxids zeichnen sich durch hohe Koerzitivfeldstärken und isotrope Magnetisierung aus. Der durch die Kobaltionen hervorgerufenen Kristallanisotropie wird durch das geringe Längen-zu-Dicken-Verhältnis ein schwacher Formanisotropieanteil überlagert, welcher sich auf die sonst vorhandene Empfindlichkeit der magnetischen Eigenschaften bei thermischer oder mechanischer Belastung günstig auswirkt ohne jedoch eine Orientierung der Teilchen zu bewirken, welche die Herstellung isotroper Aufzeichnungsmedien beeinträchtigen würde.

Wesentlicher Verwendungszweck der erfindungsgemäß hergestellten kobalthaltigen, isotropen magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen, mit welchen die Vorteile der Aufzeichnung mittels der wirksamen Vertikalkomponente zur Erhöhung von Bitdichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele erläutert, ohne sie hierdurch einzuschränken. Die angegebenen Co(II)-Prozentgehalte beziehen sich als Gew.% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in kA/m, wurden bei den Pulvermessungen auf eine Stopfdichte von $\varepsilon = 1,2$ g/cm$^3$ bezogen. Spezifische Remanenz ($M_r/_\varepsilon$) und Sättigung ($M_m/_\varepsilon$) sind jeweils in nTm$^3$/g angegeben. Die Sättigung bzw. Remanenz von Bändern werden in [mT] angegeben.

Die Schaltfeldstärkenverteilung (SFD, switching field distribution) ist ein Maß für die magnetische Einheitlichkeit einer i.a. aus magnetisierbaren Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Meßgröße für SFD wird (1-S*) herangezogen. (1-S*) wird aus der Steilheit der Hysteresekurve bei M=0 (d.h. $H_c$) gemäß der Formel $dM/dH=M_R/(1-S^*)\cdot H_c)$ gewonnen (M.L.Williams, R.L.Comstock, AIP Conf. Proc. 5, 738 (1971).

Beispiel 1A

969 g Fe(OH)$_3$·nH$_2$O, hergestellt durch Fällen einer Lösung von 909 g Fe(NO$_3$)$_3$·9H$_2$O in 6,75 1 H$_2$O bei 60°C und einem pH-Wert von 7,5, Filtrieren und Waschen, wurden in 4271 ml H$_2$O suspendiert (entsprechend einem Fe-Gehalt von 0,45 Mol/l), mit 4,55 g Na-Citrat·5,5 H$_2$O und 0,65 g Weinsäure sowie 8,80 g Kobalt(II)hydroxidcarbonat versetzt und durch Rühren gut gemischt. Anschließend wurde der pH-Wert durch Zugabe von 20 ml 25%iger NaOH auf 12,0 eingestellt. Das Reaktionsgemisch wurde unter Rühren in einem 8-l-Autoklav innerhalb von 5 Stunden auf 170°C erhitzt und nach dem Abkühlen filtriert, gewaschen und getrocknet. Es wurden 158 g kobalthaltiges α-Fe$_2$O$_3$ erhalten. Die elektronenmikroskopische Aufnahme zeigt die erwünschte schwach elongierte Form des Produkts. Der Kobaltgehalt betrug 2,26 Gew.%.

Beispiel 1B bis 1F

Es wurde wie in Beispiel 1A beschrieben, verfahren, jedoch wurden die Kobaltmenge, der pH-Wert und die Temperaturführung wie in Tabelle 1 angegeben verändert.

Tabelle 1

| Beispiel spiel 1 | Co-Salz [g] | pH | Temperatur- führung | Gew.% Co in $\alpha$-Fe$_2$O$_3$ | 1/d |
|---|---|---|---|---|---|
| A | 8,80 | 12,0 | in 5 h auf 170°C | 2,26 | 2,0 |
| B | 17,56 | 12,0 | in 2 h auf 130°C, an-schl. in 2,8 h auf 170°C | 4,50 | 2,0 |
| C | 14,42 | 12,0 | in 2 h auf 140°C, an-schl. in 1,5 h auf 175°C | 3,40 | 1,8 |
| D | 16,93 | 11,3 | in 7,6 h auf 170°C | 4,00 | 1,5 |
| E (Vergl.) | 0,80 | 11,6 | in 3 h auf 130°C, an-schl. in 2 h auf 170°C | 0,20 | 6,3 |
| F | 5,27 | 11,3 | in 1 h auf 70°C, an-schl. in 60 h auf 96°C | 3,60 | 3,1 |

Beispiel 2A

1107 g kobalthaltiges Fe(OH)$_3$·nH$_2$O, hergestellt durch Fällen einer Lösung von 909 g Fe(NO$_3$)$_3$·9H$_2$O und einem Gehalt von 0,053 Mol Co je Mol Fe in 6,75 l H$_2$O bei 60°C und einem pH-Wert von 7,5, Filtrieren und Waschen, wurden in 4,13 l H$_2$O suspendiert (entsprechend 0,45 Mol/l Fe-Gehalt), mit 4,55 g Na-Ci-trat·5,5 H$_2$O und 0,65 g Weinsäure versetzt und durch Rühren gut gemischt. Anschließend wurde der pH-Wert mit 1,8 ml 25%iger wäßriger NaOH auf 11,34 eingestellt. Das Reaktionsgemisch wurde unter Rühren innerhalb von 4,5 h auf 180°C erhitzt und nach dem Abkühlen filtriert, gewaschen und getrocknet. Es wurden 140 g $\alpha$-Fe$_2$O$_3$ mit einem Kobaltgehalt von 3,6 Gew.% erhalten.

Beispiele 2B und 2C

Es wurde wie in Beispiel 2A beschrieben verfahren, jedoch wurden die Kobaltmenge, der pH-Wert und die Temperaturführung wie in Tabelle 2 angegeben verändert.

Tabelle 2

| Bei-spiel 2 | Co-Salz in Fällung [Mol Co/Mol Fe] | pH | Temperaturführung | Gew.% Co in $\alpha$-Fe$_2$O$_3$ | 1/d |
|---|---|---|---|---|---|
| A | 0,053 | 11,3 | in 4,5 h auf 180°C | 3,60 | 2,0 |
| B | 0,053 | 11,8 | in 5,5 h auf 170°C | 3,50 | 2,7 |
| C | 0,038 | 11,8 | in 3 h auf 140°C, an-schl. in 2,4 h auf 180°C | 2,50 | 3,3 |

Beispiele 3A bis 3P

Es wurden jeweils 80 g kobalthaltiges $\alpha$-Fe$_2$O$_3$ der Beispiele 1 und 2 in einem Drehrohrofen zu kobalthaltigem Magnetit reduziert. Die Daten der Reaktionstemperatur und Dauer sind in Tabelle 3 aufgeführt. Die Beispiele 3D und 3E wurden in einem Wasserstoffvolumenstrom von 50 Nl/h verdünnt mit einem Stickstoffvolumenstrom von 50 Nl/h reduziert. Die übrigen Proben wurden zusätzlich vor der Reduktion mit 2,5 Gew.% Stearinsäure versetzt. Vor dem Eintritt in das Reduktionsrohr wurde der H$_2$-Strom durch Wasser einer Temperatur von 60 bis 80°C hindurchgeleitet. Nach beendeter Reduktion wurde die Magnetitprobe in einem Ofen gleicher Bauart innerhalb von 30 Minuten in einem Luftstrom von 50 Nl/h zu kobalthaltigem $\gamma$-Fe$_2$O$_3$ oxidiert. Die Oxidationstemperatur sowie die erhaltenen magnetischen Werte sind ebenfalls in Tabelle 3 aufgeführt.

Tabelle 3

| Beispiel | Co-$\alpha$-Fe$_2$O$_3$ aus Beispiel | Reduktion Dauer [Min] | Reduktion Temp. [°C] | Oxidation Temp. [°C] | $H_c$ [kA/m] | $M_{r/\varrho}$ [nTm$^3$/g] | $M_r/M_m$ |
|---|---|---|---|---|---|---|---|
| A | 1A | 30 | 380 | 280 | 39,6 | 55 | 0,68 |
| B | 1A | 30 | 380 | 320 | 37,8 | 54 | 0,68 |
| C | 1B | 30 | 380 | 280 | 71,4 | 56 | 0,76 |
| D | 1B | 30 | 380 | 280 | 67,7 | 54 | 0,74 |
| E | 1C | 30 | 380 | 280 | 54,0 | 49 | 0,69 |
| F | 1C | 30 | 450 | 280 | 56,0 | 48 | 0,68 |
| G | 1C | 30 | 420 | 280 | 63,1 | 56 | 0,75 |
| H | 1D | 30 | 380 | 280 | 68,8 | 47 | 0,70 |
| I | 1D | 120 | 350 | 300 | 70,9 | 45 | 0,70 |
| J | 2A | 30 | 380 | 280 | 79,4 | 47 | 0,72 |
| K | 2A | 120 | 320 | 300 | 89,7 | 48 | 0,83 |
| L | 2B | 30 | 380 | 280 | 85,7 | 57 | 0,79 |
| M | 2B | 180 | 330 | 280 | 82,2 | 53 | 0,79 |
| N | 2C | 30 | 380 | 280 | 57,5 | 54 | 0,69 |
| O | 1E | 30 | 380 | 280 | 18,1 | 31 | 0,43 |
| P | 1F | 30 | 380 | 280 | 39,7 | 52 | 0,66 |

Beispiel 4

In einer mit 100 Teilen Stahlkugeln gefüllten Kugelmühle mit einem Füllvolumen von 250 Volumenteilen, wurden jeweils 50 Teile der in Tabelle 2 angegebenen magnetischen isotropen Eisenoxide, 3 Teile eines langkettigen, amphoteren, organophilen Dispergierhilfsmittels, 0,05 Teile eines Siliconöls und 0,5 Teile eines isomeren Carbonsäuregemischs, 6,6 Teile eines handelsüblichen isocyanatfreien Polyesterurethans aus Adipinsäure, Butandiol-1,4 und 4,4-Dicyanatodiphenylmethan mit einem K-Wert von 61 (gemessen als 1%ige Lösung in Tetrahydrofuran) und 25 Teilen eines Vinylchlorid-Maleinsäuremethylester-Copolymeren mit einem K-Wert von 59 (ebenfalls als 1%ige Lösung in Tetrahydrofuran gemessen) sowie 78 Teile eines Gemisches aus gleichen Teilen von Tetrahydrofuran und 1,4-Dioxan zugegeben, wobei die Eingabe der angegebenen Bindemittel in Form ihrer Lösungen in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 μm dicke Polyethylenterephthalatfolie gegossen, so daß nach Trocknung in einem Trockenkanal und anschließendem Glättvorgang mit auf 80°C beheiztem Mehrwalzenkalander eine Schichtdicke von 5,2 μm erzielt wurde. Die an der Magnetschicht gemessenen magnetischen Eigenschaften sind in Tabelle 4 angegeben.

EP 0 198 436 B1

<u>Tabelle 4</u>

| Eingesetztes Eisenoxid Probe | $H_c$ [kA/m] | $M_r$ [mT] | SFD | $M_r/M_m$ |
|---|---|---|---|---|
| 3E | 57,4 | 133 | 0,42 | 0,79 |
| 3H | 66,3 | 132 | 0,39 | 0,78 |
| 3L | 82,8 | 147 | 0,36 | 0,83 |
| 3M | 80,0 | 136 | 0,38 | 0,83 |
| 3N | 53,3 | 138 | 0,42 | 0,75 |

## Ansprüche

1. Verfahren zur Herstellung isotroper magnetischer, kobalthaltiger Eisenoxide auf der Basis von $\gamma$-$Fe_2O_3$ mit einem Gehalt an Kobalt(II)-Ionen von 1 bis 7 Gew.-% und einem Längen-zu-Dicken-Verhältnis von 1,2 bis 3,5, dadurch gekennzeichnet, daß durch Umsetzen von Eisen(III)-hydroxid in alkalischer Suspension in Gegenwart von Kobalt(II)-Ionen sowie von einem oder mehreren Wachstumsregulierungsmitteln, aus der Gruppe der mit Eisen(III)-Ionen Chelatkomplexe bildenden Verbindungen, unter Ausschluß von $\alpha$-$Fe_2O_3$-Keimen bei erhöhter Temperatur ein kobalthaltiges $\gamma$-$Fe_2O_3$ hergestellt wird, das nach dem Abfiltrieren, Waschen und Trocknen durch Erhitzen in einer reduzierenden Atmosphäre zu kobalthaltigem Magnetit reduziert und anschließend in sauerstoffhaltiger Atmosphäre zu kobalthaltigem Eisenoxid oxidiert wird.

2. Verfahren nach Anspruch 1, <u>dadurch gekennzeichnet</u>, daß die Kobalt(II)-Ionen vor der Fällung der Eisen(III)-Salze zugesetzt werden und ein homogen mit $Co(OH)_2$ versetztes $Fe(OH)_3$ eingesetzt wird.

3. Verfahren nach Anspruch 1, <u>dadurch gekennzeichnet</u>, daß die Kobalt(II)-Ionen vor der Synthese zusammen mit dem $Fe(OH)_3$ und/oder $Fe(OH)_3/Co(OH)_2$ als lösliches Kobaltsalz zugesetzt werden.

4. Verfahren nach Anspruch 1, <u>dadurch gekennzeichnet</u>, daß der pH-Wert auf 9 bis 13 eingestellt wird.

5. Verfahren nach Anspruch 1, <u>dadurch gekennzeichnet</u>, daß das Wachstumsregulierungsmittel eine oder mehrere $\alpha$-Hydroxycarbonsäure ist.

6. Verfahren nach Anspruch 5, <u>dadurch gekennzeichnet</u>, daß die Konzentration des Wachstumsregulierungsmittel $10^{-3}$ bis $10^{-2}$ Mol/l beträgt.

7. Verfahren nach Anspruch 1, <u>dadurch gekennzeichnet</u>, daß die Endtemperatur bei der Bildung des kobalthaltigen $\alpha$-$Fe_2O_3$ durch langsames Aufheizen eingestellt wird und zwischen 70 und 250°C beträgt.

## Claims

1. A process for the preparation of an isotropic magnetic cobalt-containing iron oxide based on $\gamma$-$Fe_2O_3$, containing from 1 to 7% by weight of cobalt(II) ions and having a length/thickness ratio of from 1.2 to 3.5, wherein a cobalt containing $\alpha$-$Fe_2O_3$ is prepared by converting iron(III) hydroxide at elevated temperatures in alkaline suspension in the presence of cobalt(II) ions and of one or more growth regulators selected from the group consisting of the compounds which form chelates with iron(III) ions, excluding $\alpha$-$Fe_2O_3$ nuclei, the resulting $\alpha$-$Fe_2O_3$ is filtered off, washed, dried and then reduced to cobalt-containing magnetite by heating in a reducing atmosphere, and the product is then oxidized to cobalt-containing iron oxide in an oxygen-containing atmosphere.

2. A process as claimed in claim 1, wherein the cobalt (II) ions are added before precipitation of the iron (III) salt, and an $Fe(OH)_3$ containing homogeneously distributed $Co(OH)_2$ is used.

3. A process as claimed in claim 1, wherein the cobalt (II) ions are added be fore the synthesis, together with the $Fe(OH)_3$ and/or $Fe(OH)_3/Co(OH)_2$, as a soluble cobalt salt.

4. A process as claimed in claim 1, wherein the pH is brought to 9-13.

7

5. A process as claimed in claim 1, wherein the growth regulator comprises one or more α-hydroxy-carboxylic acids.

6. A process as claimed in claim 5, wherein the concentration of the growth regulator is from $10^{-3}$ to $10^{-2}$ mole/l.

7. A process as claimed in claim 1, wherein the final temperature during formation of the cobalt-containing α-Fe$_2$O$_3$ is reached by slow heating, and is from 70 to 250°C.

**Revendications**

1. Procédé de préparation d'oxydes de fer, à teneur en cobalt, magnétiques, isotropes, à base de γ-Fe$_2$O$_3$, d'une teneur en ions cobalt (II) de 1 à 7% en poids et d'un rapport longueur/épaisseur de 1,2 à 3,5 caractérisé par le fait que, par réaction d'hydroxyde de fer (III) en suspension alcaline, en présence d'ions cobalt (II) ainsi que d'un ou plusieurs régulateurs de croissance, du groupe des composés formant, avec les ions fer (III), des complexes chélatés, en l'absence de germes de α-Fe$_2$O$_3$, on prépare, à température élevée, un γ-Fe$_2$O$_3$ à teneur en cobalt qui, après filtration, lavage et séchage par chauffage, est réduit, en atmosphère réductrice, en magnétite à teneur en cobalt et oxydé ensuite, en atmosphère oxygénée, en oxyde de fer à teneur en cobalt.

2. Procédé selon la revendication 1, caractérisé par le fait que les ions cobalt (II) sont ajoutés avant la précipitation du sel de fer (III) et qu'est introduit un Fe(OH)$_3$ homogène, additionné de Co(OH)$_2$.

3. Procédé selon la revendication 1, caractérisé par le fait qu'on ajoute les ions cobalt (II), comme sel de cobalt soluble, avant la synthèse avec le Fe(OH)$_3$ et/ou Fe(OH)$_3$/Co(OH)$_2$.

4. Procédé selon la revendication 1, caractérisé par le fait qu'on règle le pH à une valeur de 9 à 13.

5. Procédé selon la revendication 1, caractérisé par le fait que le régulateur de croissance est un ou plusieurs acides α-hydroxycarboxyliques.

6. Procédé selon la revendication 5, caractérisé par le fait que la concentration du régulateur de croissance est de $10^{-3}$ à $10^{-2}$ mole/l.

7. Procédé selon la revendication 1, caractérisé par le fait que la température finale, lors de la formation du α-Fe$_2$O$_3$ à teneur en cobalt, est réglée par chauffage lent et est comprise entre 70 et 250 degrés C.